# EUROPÄISCHE PATENTSCHRIFT

(11) **EP 0 593 863 B1**
(45) Veröffentlichungstag und Bekanntmachung des Hinweises auf die Patenterteilung: **10.12.1997**
(21) Anmeldenummer: 93112211.3
(22) Anmeldetag: 30.07.1993
(51) Int. Cl.: C08J 9/02, C08L 83/04, C08J 9/00

(54) **Verfahren zum Herstellen von Siliconschaumformteilen im Spritzgiessverfahren**
Process for producing foamed silicone articles by injection moulding
Procédé de préparation de pièces moulées en silicon par injection

(30) Priorität: 22.10.1992 DE 4235639
(43) Veröffentlichungstag der Anmeldung: 27.04.1994
(73) Patentinhaber: ERNST SONDERHOFF GmbH & Co. KG, D-50829 Köln (DE)
(72) Erfinder: Giesen, Franz-Josef, D-50129 Bergheim (DE)
(74) Vertreter: Vollbach, Hans, Dipl.-Ing.

(56) Entgegenhaltungen:
- FR-A- 2 575 086
- CHEMICAL ABSTRACTS, vol. 105, no. 14, 6. Oktober 1986, Columbus, Ohio, US; abstract no. 116363m, NAKAMURA AKITO & AL. 'Curable polyorganosiloxane compositions' & JP-A-61 078 866 (TORAY SILICONE CO. LTD.) 22. April 1986
- DATABASE WPI Week 7948, Derwent Publications Ltd., London, GB; AN 86639B 'Silicone resin composition for foam moulding' & JP-A-54 134 774 (KYOTO CERAMIC K. K.) 19. Januar 1979

## Beschreibung

Die Erfindung betrifft ein Verfahren zum Herstellen von Siliconschaumformteilen im Spritzgießverfahren, wobei die Zweikomponenten-Schaumstoffreaktionsmasse in einer Spritzgußform zur Ausschäumung gebracht wird.

Siliconelastomer-Formteile werden in vielfältiger Weise im Spritzgießverfahren hergestellt, ohne daß aber bisher hinsichtlich der Schaumstoffqualität zufriedenstellende Ergebnisse erzielt werden konnten.

Aus der EP-0 416 229 A2 ist ein Verfahren zum Herstellen eines feinporigen, weich-elastischen Dichtungsschaumes für Deckel-,Gehäuse-und Hohlraumdichtungen bekannt, bei dem die Schaumstoff-Reaktionskomponenten mittels einer Niederdruck-Zweikomponenten-Dosieranlage verarbeitet und im Freiverschäumungsverfahren ohne Wärmezufuhr zur Aufschäumung gebracht werden. Die eine Komponente besteht dabei aus einem Siliconpolymer mit mindestens zwei Doppelbindungen im Molekül, vorzugsweise Vinylgruppen, einem organischen Platin-Katalysator, pyrogener Kieselsäure (als Verdickungs- bzw. Schaumverfestigungsmittel), Wasser (als Treibmittel) und gegebenenfalls weiteren Zusätzen, wie Füll-,Verstärkungs-, Verdickungs-, Haftverbesserungs- und Alterungsschutzmittel sowie Farbpigmente, während die andere Komponente (Vernetzerkomponente) aus Wasserstoffsiloxan besteht. Bei dem hier im Freischäumverfahren hergestellten Siliconschaumstoff wird durch die Wasserzugabe zu der Siliconkomponente erreicht, daß beim Aufschäumen der Siliconmasse das Wasserstoffsiloxan praktisch vollständig zur Reaktion gebracht wird, so daß sich ein hoher Wasserstofftreibeffekt einstellt und die Nachreaktion mit schädlichen Auswirkungen auf die Qualität des Silicon-Dichtungsschaumstoffs vermieden wird. Die Erhöhung des Treibeffektes bietet dabei die Möglichkeit, die Wasserstoffsilicon-Konzentration in der Siliconmasse verhältnismäßig niedrig zu halten.

Die Erfindung geht von Siliconmassen aus, bei denen als Treibmittel Wasser und als Vernetzerkomponente Wasserstoffsiloxan verwendet wird. Aufgabe der Erfindung ist es, ein wirtschaftliches und technisch gut zu handhabendes Verfahren zu schaffen, mit dem sich hochwertige, feinzellige Siliconschaumformteile frei von physiologisch bedenklichen Treibmitteln im Spritzgießverfahren preisgünstig herstellen lassen.

Diese Aufgabe wird erfindungsgemäß mit folgenden Merkmalen gelöst:
- Herstellung der Komponente A aus
   Siliconpolymer mit mindestens zwei Doppelbindungen pro Molekül, vorzugsweise Vinylgruppen,
   organischem Platin-Katalysator, komplexiert mit Butinol; pyrogene Kieselsäure,
   Wasser,
   und der Komponente B aus
- Siliconpolymer mit mindestens
   zwei Doppelbindungen pro Molekül, vorzugsweise Vinylgruppen,
   pyrogener Kieselsäure,
   Polydimethylhydrogensiloxan (SiH Vernetzer);
- Druckbeaufschlagung mindestens einer der beiden Komponenten, vorzugsweise beider Komponenten A und B, vor ihrer Vermischung mit einem Druckgas in einem Druckbehälter zur Lösung des Gases in der bzw. den Komponenten;
- Vermischung der beiden Komponenten A und B unter Druckhaltung;
- und Einspritzen des Reaktionsgemischs in die Spritzgußform unter Druckentspannung mit Erwärmung des Reaktionsgemischs innerhalb der Spritzgußform,
- wobei die eingesetzten Komponenten A und B zumindest weitgehend frei von Luftblasen sind, während das aus den Komponenten A und B gebildete Gemisch bis zum Einführen in die Spritzgußform frei von Luftblasen ist.

Vorzugsweise werden Komponenten A und B folgender Zusammensetzung verwendet:

| Komponente A | |
|---|---|
| 100 g | Siliconpolymer mit mindestens zwei Doppelbindungen pro Molekül, vorzugsweise Vinylgruppen, |
| | |
| 0,2-5g | organischer Platin-Katalysator, komplexiert mit Butinol, |
| | |
| 5-40g | pyrogene Kieselsäure |
| | |
| 0,05-5g | Wasser |
| | |
| | gegebenenfalls weitere Additive; |

| Komponente B | |
|---|---|
| 100 g | Siliconpolymer mit mindestens zwei Doppelbindungen je Molekül, vorzugsweise Vinylgruppen, |
| 5-40 g | pyrogene Kieselsäure |
| 3-20 g | Polydimethylhydrogensiloxan (SiH Vernetzer), wobei die Komponenten A und B im Mischungsverhältnis 1:1 vermischt werden. |

Die im Mischungsverhältnis 1:1 der Spritzgußform zugeführten Komponenten A und B besitzen bei 20°C eine Topfzeit von mindestens 3 Tagen (bedingt durch das Butinol). Die Viskosität der schaummodifizierten LSR-Siliconmassen, also des Schaumstoffreaktionsgemisches kann 5.000-2.000.000 Mio. mPa.s betragen.

Vorzugsweise wird für die beiden Komponenten A und B als Siliconpolymer eine Fluorsiliconpolymer verwendet.

Das erfindungsgemäße Verfahren geht von den beiden vorgenannten Komponenten A und B aus, die beide Siliconpolymer und pyrogene Kieselsäure zur mechanischen Verfestigung des Siliconschaumes enthalten, wobei die eine Komponente A von etwaigen weiteren Zusätzen abgesehen, den mit Butinol komplexierten organischen Platin-Katalysator und Wasser als Treibmittel ausweist, während die andere Komponente B zusätzlich das Wasserstoffsiloxan enthält. Vor der Vermischung der beiden Komponenten zur Bildung des Schaumstoffreaktionsgemisches wird zumindest die eine der beiden Komponenten (vorzugsweise beide Komponenten) über eine solch lange Zeit hinweg unter Druckgasbeaufschlagung in einem Druckbehälter gehalten, daß sich in der Komponente das Druckgas möglichst durchgreifend verteilt in gelöster Form befindet. Diese Druckgasbeaufschlagung beträgt im allgemeinen mehrere Stunden, gegebenenfalls sogar mehrere Tage, und ist abhängig vom Beaufschlagungsdruck. Anschließend erfolgt eine statische Vermischung der beiden Komponenten unter Wahrung des Drucks, worauf das kalte, etwa auf Raumtemperatur befindliche und wegen des Butinol-komplexierten Platinkatalysators nicht reaktionsfähige Gemisch in die Spritzgußform so eingespritzt wird, daß es diese nur teilweise ausfüllt. Durch Erwärmung des druckentspannten Gemischs in der Spritzgußform entsteht innerhalb kürzester Zeit, deren Dauer je nach Größe des Spritzgußteils zwischen einigen Sekunden und einigen Minuten liegt, ein feinporiges, homogenes und hochwertiges Siliconschaumformteil. Bei der Ausreaktion der Reaktionsmasse in der Spritzgußform hat das gelöste Gas die Funktion der Schaumnukleierung, die für die Bildung des feinporigen, homogenen Siliconschaumformteils verantwortlich ist. Der bei der Aufschäumung entstandene geringe Anteil an Wasserstoff kann nach dem Entfernen des Siliconschaumformteils aus der Spritzgußform und nach Überführung desselben in einem geschlossenen Lagerbehälter od.dgl. abgesaugt werden.

Als Druckgas für die Beaufschlagung der beiden Komponenten A und B oder nur einer dieser Komponenten wird vorzugweise trockene Luft oder Stickstoff verwendet, obwohl auch andere Gase, insbesondere Edelgase, einsetzbar sind. Die Verwendung von Luft oder Stickstoff ist schon aus Kostengründen vorzuziehen.

Im allgemeinen wird das erfindungsgemäße Verfahren mit Erfolg so durchgeführt, daß die Druckgasbeaufschlagung der genannten Komponenten oder einer dieser Komponenten über eine Dauer von mindestens zwei Stunden mit einem Druck des Druckgases durchgeführt wird, der bei 5-50 bar liegt. Das Schaumstoff-Reaktionsgemisch wird in der Spritzgußform zweckmäßig auf eine Temperatur von etwa 170°C-220°C erwärmt.

Wesentlich ist auch, daß die bei dem erfindungsgemäßen Verfahren eingesetzten Komponenten A und B frei von Luftblasen sind und auch das aus den Komponenten nach Druckgasbeaufschlagung hergestellte Gemisch bis zur Einführung in die Spritzgußform frei von Luftblasen gehalten wird, da Einschlüsse von Luftblasen die Bildung eines feinporigen homogenen Siliconschaumstoffs stören. Es empfiehlt sich daher, die Vermischung der beiden Komponenten in einem gegenüber der Außenatmosphäre geschlossenen Rohrleitungsund/oder Mischsystem durchzuführen.

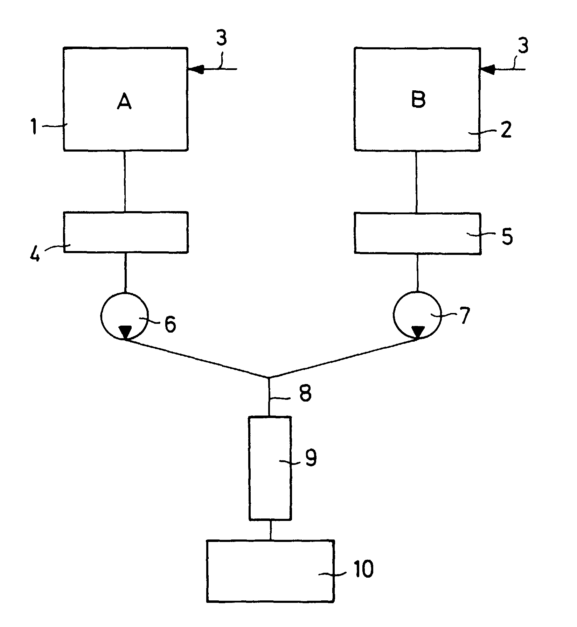

Das erfindungsgemäße Verfahren wird nachfolgend im Zusammenhang mit dem in der Zeichnung nur schematisch wiedergegebenen Ausführungsbeispiel näher erläutert.

Die dargestellte Anlage weist zwei Druckbehälter 1 und 2 auf, von denen der eine die Komponente A und der andere die Komponente B aufnimmt, wobei beide Komponenten zumindest weitgehend frei von Luftblasen sind. Die beiden Druckbehälter 1 und 2 sind jeweils an eine Druckgasleitung 3 angeschlossen, über die ein Druckgas, vorzugsweise trockene Luft oder Stickstoff, unter einem Druck in die Druckbehälter eingeleitet werden kann, so daß die im Druckbehälter befindliche Komponente über längere Zeit hinweg, vorzugsweise über mindestens zwei Stunden oder mehr unter der Druckgasbeaufschlagung gehalten wird. Der Beaufschlagungsdruck liegt zweckmäßig bei 5-50 bar. Die von dem Druckgas beaufschlagte Komponente nimmt das Gas in gelöster Form auf.

Den Druckbehältern 1 und 2 ist jeweils ein Zwischenbehälter 4 bzw. 5 zugeordnet, der die aus dem Druckbehälter 1 bzw. 2 abgezogene, das Gas in gelöster Form enthaltene Komponente unter Beibehaltung des Drucks aufnimmt. Die Komponenten A und B befinden sich daher in den gegenüber der Außenatmosphäre abgedichteten Zwischenbehältern 4 und 5 unter Druckvorspannung. Aus den beiden Zwischenbehältern 4 und 5 können die Komponenten A und B jeweils über eine Dosierpumpe 6 bzw. 7 in dem vorgegebenen Mischungsverhältnis, das vorzugsweise 1:1 beträgt, abgezogen und über eine Rohrleitung 8 unter Druckhaltung einem Schneckenextruder 9 zugeführt werden, der die Komponenten A und B vermischt und das so gebildete Schaumstoff-Reaktionsgemisch in die Spritzgußform 10 spritzt und zwar so, daß das eingespritzte Gemisch die Spritzgußform nur teilweise ausfüllt. Das eingespritzte Gemisch entspannt sich in der Spritzgußform 10 und wird in dieser auf eine Temperatur von etwa 170° - 220° C erwärmt. Hierbei entsteht innerhalb kurzer Zeit ein feinporiges, hochwertiges Siliconschaumformteil. Nach dem Entformen des Siliconschaumformteils kann dieses in einen Lagerraum, einen Lagerbehälter o.dgl. überführt werden, aus dem etwaiger noch austretender Wasserstoff durch Absaugung entfernt werden kann.

## Patentansprüche

1. Verfahren zum Herstellen von Siliconschaumformteilen im Spritzgießverfahren, wobei die Zweikomponenten-Schaumstoffreaktionsmasse in einer Spritzgußform zur Ausschäumung gebracht wird, **gekennzeichnet durch** folgende Merkmale:
- Herstellung der Komponente A aus
Siliconpolymer mit mindestens zwei Doppelbindungen pro Molekül, vorzugsweise Vinylgruppen,
organischem Platin-Katalysator, komplexiert mit Butinol,
pyrogener Kieselsäure
Wasser,
und der Komponente B aus
- Siliconpolymer mit mindestens zwei Doppelbindungen pro Molekül, vorzugsweise Vinylgruppen,
pyrogener Kieselsäure,
Polydimethylhydrogensiloxan (SiH Vernetzer)
- Druckbeaufschlagung mindestens einer der beiden Komponenten A und B, vorzugsweise beider Komponenten, vor der Vermischung mit einem Druckgas in einem Druckbehälter zur Lösung des Gases in der bzw. den Komponenten,
- Vermischung der beiden Komponenten unter Druckhaltung,
- und Einspritzen des Reaktionsgemischs in die Spritzgußform unter Druckentspannung mit Erwärmung des Reaktionsgemischs innerhalb der Spritzgußform,
- wobei die eingesetzten Komponenten A und B zumindest weitgehend frei von Luftblasen sind, während das aus den Komponenten A und B gebildete Gemisch bis zum Einführen in die Spritzgußform frei von Luftblasen ist.

2. Verfahren nach Anspruch 1, **dadurch gekennzeichnet,** daß Komponenten A und B folgender Zusammensetzung verwendet werden
| Komponente A: | |
|---|---|
| 100 g | Siliconpolymer mit mindestens zwei Doppelbindungen pro Molekül, vorzugsweise Vinylgruppen, |
| | |
| 0,2-5 g | organischer Platin-Katalysator, komplexiert mit Butinol, |
| | |
| 5-40 g | pyrogene Kieselsäure, |
| | |
| 0,05-5 g | Wasser |
| | |
| gegebenenfalls weitere Additive; | |
| Komponente B: | |
|---|---|
| 100 g | Siliconpolymer mit mindestens zwei Doppelbindungen pro Molekül, vorzugsweise Vinylgruppen, |
| 5-40 g | pyrogene Kieselsäure, |
| 3-20 g | Polydimethylhydrogensiloxan, |
wobei die Komponenten A und B im Mischungsverhältnis 1:1 vermischt werden.

3. Verfahren nach Anspruch 1 oder 2, **dadurch gekennzeichnet, daß** als Siliconpolymer der beiden Komponenten A und B ein Fluorsiliconpolymer verwendet wird.

4. Verfahren nach einem der Ansprüche 1 bis 3, **dadurch gekennzeichnet, daß** die Komponente (n) A und B über eine Zeitdauer von mindestens 2 Stunden mit einem Druck des Druckgases von 5-50 bar im Druckbehälter beaufschlagt wird (werden) .

5. Verfahren nach einem der Ansprüche 1 bis 4, **dadurch gekennzeichnet, daß** das Schaumstoff-Reaktionsgemisch in der Spritzgußform auf eine Temperatur von 170° bis 220° C erwärmt wird.

6. Verfahren nach einem der Ansprüche 1 bis 5, **dadurch gekennzeichnet, daß** als Druckgas Luft oder Stickstoff verwendet wird.

7. Verfahren nach einem der Ansprüche 1 bis 6, **dadurch gekennzeichnet, daß** die Komponenten A und B aus dem Druckbehälter (1, 2) in einen Zwischenbehälter (4, 5) abgezogen und aus diesem unter Vermischen in einem geschlossenen Druckleitungssystem zusammengeführt werden.

8. Verfahren nach Anspruch 7, **dadurch gekennzeichnet, daß** das Schaumstoff-Reaktionsgemisch mittels einer Extruderschnecke unter Teilfüllung der Spritzgußform (10) in diesen eingespritzt wird.

9. Verfahren nach einem der Ansprüche 1 bis 8, **dadurch gekennzeichnet,** daß als weitere Additive zur Komponente A Farbpigmente, wie z.B. Ruß, Eisenoxidrot, Schaumregulator, wie z.B. Fluortenside, Flammschutzmittel und/oder Füllstoff Quarzmehl, einzeln oder in Kombination verwendet werden.

## Claims

1. Process for producing silicon foam shapes by injection moulding, and the two-component foam-reaction substance is foamed in an injection mould, **characterised by** the following features:
- Producing Component A from
silicon polymer with at least two double bondings per molecule, preferably vinyl groups;
organic platinum catalyst, complexed with Butinol, pyrogen silicic acid;
water;
and Component B from
- silicon polymer with at least two double bondings per molecule, preferably vinyl groups;
pyrogen silicic acid;
polydimethyl hydrogen siloxane (SiH cross-bonding agent)
- pressurisation of at least one of the two components A and B, preferably of both components, prior to mixing with a pressure gas in a pressure vessel for release of the gas in the component(s);
- mixing of both components whilst maintaining pressure;
- and injecting the reaction mixture into the injection mould with releasing pressure with heating of the reaction mixture within the injection mould;
- and applied components A and B are at least extensively free of air bubbles, whilst the mixture formed of components A and B is up to insertion into the injection mould free of air bubbles.

2. Process according to Claim 1, **characterised in that** components A and B of the following composition are used:
| Component A: | |
|---|---|
| 100g | silicon polymer with at least two double bondings per molecule, preferably vinyl groups; |
| 0.2 - 5g | organic platinum catalyst, complexed with Butinol; |
| 5 - 40g | pyrogen silicic acid; |
| 0.05 - 5g | water; |
further additives, if appropriate;
| Component B: | |
|---|---|
| 100g | silicon polymer with at least two double bondings per molecule, preferably vinyl groups; |
| 5 - 40g | pyrogen silicic acid; |
| 3 - 20g | polydimethyl hydrogen siloxane; |
and components A and B are mixed at a mixing ratio of 1:1.

3. Process according to Claim 1 or 2, **characterised in that** a fluor silicon polymer is used as silicon polymer of both components A and B.

4. Process according to one of Claims 1 to 3, **characterised in that** the component(s) A and B is/are for a period of at least 2 hours pressurised in the pressure vessel by a pressure of pressure gas between 5 - 50 bar.

5. Process according to one of Claims 1 to 4, **characterised in that** the foam material reaction mixture is heated in the injection mould to a temperature between 170° and 220°C.

6. Process according to one of Claims 1 to 5, **characterised in that** air or nitrogen are used as pressure gas.

7. Process according to one of Claims 1 to 6, **characterised in that** components A and B are drawn off pressure vessel (1, 2) into an intermediate vessel (4, 5) and combined therefrom by mixing in a sealed pressure-pipe system.

8. Process according to Claim 7, **characterised in that** the foam material reaction mixture is injected by means of an extruder screw whilst partially filling the injection mould (10).

9. Process according to one of Claims 1 to 8, **characterised in that** as further additives to component A are used pigments such as carbon black, iron oxide red, and foam regulators such as fluor tenside, flame protection means and/or filler quartz powder, either individually or in a combination.

## Revendications

1. Procédé de fabrication de pièces moulées alvéolaires en silicone dans un procédé de moulage par injection, la masse de réaction de substance alvéolaire à deux composants étant mise en moussage dans un moule de coulée par injection, caractérisé par les propriétés ci-après :
- fabrication du composant A à partir de
polymère silicone ayant au moins deux liaisons doubles par molécule, de préférence des groupes vinyles,
un catalyseur organique à base de platine, complexé avec du butinol,
de l'acide silicique pyrogèné,
de l'eau,
et le composant B étant constitué de
- polymère silicone ayant au moins deux liaisons doubles par molécule, de préférence des groupes vinyles,
de l'acide silicique pyrogéné,
du polydiméthylhydrogènesiloxane (réticulant SiH),
- exposition à une pression d'au moins l'un des deux composants A et B, de préférence des deux composants, avant mélange avec un gaz sous pression dans un récipient à pression en vue de dissoudre le gaz dans le ou les composants.
- mélange des deux composants avec maintien sous pression.
- et injection du mélange de réaction dans le moule de coulée par injection avec détente de la pression et chauffage du mélange de réaction se trouvant à l'intérieur du moule de coulée par injection.
- les composants A et B utilisés étant au moins notablement exempts de bulles d'air, tandis que le mélange constitué des composants A et B est exempt de bulles d'air jusqu'à l'introduction dans le moule de coulée par injection.

2. Procédé selon la revendication 1, caractérisé en ce que les composants A et B de composition suivante soient utilisés :
Composant A
100 g polymère silicone ayant au moins deux liaisons doubles par molécule, de préférence des groupes vinyles,
0,2-5 g de catalyseurs organiques à base de platine, complexé avec du butinol,
5-40 g d'acide silicique pyrogèné,
0,05-5 g d'eau
le cas échéant d'autres additifs;
Composant B
100 g polymère silicone ayant au moins deux liaisons doubles par molécule, de préférence des groupes vinyles,
5-40 g d'acide silicique pyrogèné,
3-20 g de polydiméthylhydrogène siloxane,
les composants A et B étant mélangés dans un rapport de mélange 1:1.

3. Procédé selon la revendication 1 ou 2, caractérisé en ce qu'on utilise un polymère de fluor-silicone comme polymère silicone des deux composants A et B.

4. Procédé selon l'une des revendications 1 à 3, caractérisé en ce que le ou les composants (n) A et B est (sont) exposé(s), sur une durée d'au moins 2 heures, à une pression du gaz sous pression de 5 à 50 bar, ceci étant fait dans un récipient sous pression.

5. Procédé selon l'une des revendications 1 à 4, caractérisé en ce que le mélange de réaction alvéolaire se trouvant dans le moule de coulée par injection est chauffé à une température de 170 à 220° C.

6. Procédé selon l'une des revendications 1 à 5, caractérisé en ce qu'on utilise comme gaz sous pression de l'air ou de l'azote.

7. Procédé selon l'une des revendications 1 à 6, caractérisé en ce que les composants A et B sont extraits du récipient sous pression (1, 2) pour se trouver dans un récipient intermédiaire (4, 5) et extraits de celui-ci en étant mélangés et amenés dans un système fermé de conduite sous pression.

8. Procédé selon la revendication 7, caractérisé en ce que le mélange de réaction de substance alvéolaire est injecté au moyen d'une vis d'extrudeuse avec un remplissage partiel du moule de coulée par injection (10), dans celui-ci.

9. Procédé selon l'une des revendications 1 à 8, caractérisé en ce que l'on utilise comme autres additifs au composant A des pigments colorés tels que, par exemple, de la suie, du rouge d'oxyde de fer, un régulateur de moussage, tel que, par exemple, des tensioactifs fluorés, des agents de protection contre la flamme et/ou une charge, telle que de la farine de quartz, individuellement ou en combinaison.
